# EUROPEAN PATENT SPECIFICATION

(11) **EP 3 233 368 B1**
(45) Date of publication and mention of the grant of the patent: **22.08.2018**
(21) Application number: 15817929.1
(22) Date of filing: 27.11.2015
(51) Int. Cl.: B23P 9/00, C21D 7/12, C21D 9/00

(54) **METHOD OF PRODUCING A CYLINDER HEAD FOR AN INTERNAL COMBUSTION PISTON ENGINE AND A CYLINDER HEAD BLANK FOR AN INTERNAL COMBUSTION PISTON ENGINE**
VERFAHREN ZUR HERSTELLUNG EINES ZYLINDERKOPFES FÜR EINE HUBKOLBENBRENNKRAFTMASCHINE UND ZYLINDERKOPFROHLING FÜR EINE HUBKOLBENBRENNKRAFTMASCHINE
PROCÉDÉ DE FABRICATION D'UNE CULASSE POUR MOTEUR À PISTON À COMBUSTION INTERNE ET FLAN DE CULASSE POUR UN MOTEUR À PISTON À COMBUSTION INTERNE

(30) Priority: 15.12.2014 FI 20146098
(43) Date of publication of application: 25.10.2017
(73) Proprietor: Wärtsilä Finland Oy, 65380 Vaasa (FI)
(72) Inventor: FRONDELIUS, Tero, 65100 Vaasa (FI); KÖNNÖ, Juho, FI-65100 Vaasa (FI)
(74) Representative: Genip Oy
(86) International application number: PCT/FI2015/050829
(87) International publication number: WO 2016/097469

(56) References cited:
- DE-C1- 19 956 895
- FR-A1- 2 807 067
- JP-A- S60 127 928
- US-A- 4 571 969
- US-A1- 2006 042 070
- US-A1- 2010 154 501

## Description

### Technical field

The present invention relates to a method of producing a cylinder head for an internal combustion piston engine.

The present invention relates also to a cylinder head blank for an internal combustion piston engine according to the preamble of claim 10.

### Background art

In internal combustion engines, the adequate temperature level is maintained by using different kinds of cooling bores or conduits wherein cooling fluids are circulating. Particularly, the cylinder head comprises several fluid channels such as cooling channels so as to maintain the operational temperature at a preferable range. However, there is always variations in the temperature levels during the combustion process and therefore especially the cooling bores are exposed to different operational conditions. Furthermore, the cooling bores or channels transfer cooling fluid at different flow rates and pressures during the different temperatures. Thus the cooling bores, channels or alike may be exposed to corrosion or crack initiations. It is extremely unwanted that cracks occur in the central portions of the channel.

Autofrettage treatment has been used for metal products to increase their durability and resistance to stress corrosion cracking. In the autofrettage treatment, the hydraulic fluid is guided into a channel or alike of a work piece and the pressure therein is significantly increased so as to generate material internal stresses in the inner walls of the channel or alike. Thus in the autofrettage treatment the inner surface layer is plastically deformed. More specifically, the plastic deformation is an irreversible process whereas the elastic deformation is a reversible process. Generally speaking, the inner surface or inner layers of the work piece have been stretched beyond the elastic limit so that the inner surface layers do not return to its original shape once the pressure has been relieved. The autofrettage treatment thus increases a fatigue strength of the work piece. More specifically, the fatigue strength of the inner surface layers of the work piece which are subjected to plastic deformation is increased.

US 4571969 A discloses an autofrettage of thick-walled cylinders through the cyclical application of high pressure to the internal bore of the cylinder. The autofrettage of cylindrical member in cyclical pressure stages is provided so as to limit the plastic deformation of the cylinder bore while affording the residual tangential compressive stresses.

US 2010154501 A1 discloses yet another autofrettage process wherein a thick-walled work piece undergoes autofrettage. The work piece is positioned in an autofrettage apparatus and the interior space of the work piece is filled with a fluid and closed so as to be pressure-tight. The volume available to the fluid in the interior space of the work piece is reduced by moving a piston into the interior space of the work piece. This increases the pressure in the interior space of the work piece so as to autofrettage the interior surface of the interior space of the work piece.

JP S60 127928 A discloses a method of producing a cylinder head for an internal combustion piston engine comprising a step of hardening an interior surface of a work piece by impact pins.

An object of the invention is to provide a method of producing a cylinder head for an internal combustion piston engine in which the performance is considerably improved compared to the prior art solutions.

### Disclosure of the Invention

Object of the invention is met by a method of producing a cylinder head for an internal combustion piston engine comprising steps of:
- Forming a work piece to be completed to become the cylinder head,
- Forming a first cavity portion extending from a first face portion of the work piece to a predetermined distance inside the work piece, and which the first cavity portion has a first end and a second end, and that the first end being an open end and the second end being a closed end,
- Sealing the first end of the first cavity portion so being suitable for undergoing to an autofrettage process
- Performing the autofrettage process to the first cavity portion, and
- Opening the closed end of the first cavity portion by forming a second cavity portion, which the second cavity portion is extending from the second end of the first cavity portion to a second face portion and so as to form a cavity comprising the first cavity portion and the second cavity portion, and which the cavity is extending from the first face portion to the second face portion of the work piece.

Preferred embodiments are stated in the dependent claims.

This provides a method by means of which a cylinder head of high quality may be produced in improved manner. The first cavity portion extending from the first face portion of the work piece to the predetermined distance inside the work piece means that the first cavity portion is substantially arranged inside the work piece and having only one open end located at the first face portion. The material of the work piece forms the closed end. The predetermined distance is shorter than the total length of the work piece along the longitudinal axis of the first cavity portion. Due to the fact that the first cavity portion has its one end closed and another end open, only the first end of the first cavity portion needs to be sealed for the autofrettage process. Namely, the closed end of the first cavity portion acts as another plug whereas another end is sealed forming another plug. When the closed end of the first cavity portion is opened by forming the second cavity portion therein, then the first cavity portion and the second cavity portion forms the cavity extending from the first face portion to the second face portion of the work piece. Without opening the closed and forming the second cavity portion, the cavity is not complete.

Advantageously, the method provides a very hard surface for the central/middle cavity portions increasing the fatigue strength therein so as to preventing cracking or crack initiation to occur. Namely, it is particularly unwanted that cracks occur in the central/middle portions of the cavity. This is partially due to the fact that these areas can be difficult to undergo again to autofrettage process if crack initiation occur during the operational use. Therefore, it is useful that the central portions of the cavity is treated with autofrettage process well beforehand.

According to an aspect, the first cavity portion is formed by drilling a bore to the predetermined distance from the first face portion of the work piece so that the first end is open and the second end remains closed by the intact wall of the work piece. In other words, the first cavity portion does not go through the work piece extending from one face to another face. In this aspect, the first cavity portion can be called as a hole having one end closed. Therefore, the closed end is formed of the work piece and no additional material is needed for a closing purpose. The work piece itself acts as a plug in the second end of the first cavity portion. According to another aspect, the first cavity portion is produced by casting where the cavity portion is produced by a casting mold and machining the surface. In other words, the first cavity portion can be drilled or machined.

According to an aspect, the closed end of the first cavity portion is opened by drilling a hole, which hole extends from the second end of the first cavity portion to the second face portion so forming the second cavity portion. This forms the cavity, which cavity comprises the first cavity portion and the second cavity portion, which the second cavity portion is extending from the second end of the first cavity portion to the second face portion. According to another aspect, the closed end of the first cavity portion is opened by machining. In other words, the closed end can be opened by drilling or machining.

According to an aspect compressive stress in a range of 100 - 1000 MPa is provided to inner surface layers of the first cavity portion.

According to an aspect the compressive stress is arranged over a thickness of 0,15 mm - 10 mm.

As an example, it is possible to obtain, for example, over 300 MPa compressive stress for inner surface layers of the first cavity portion having thickness of 1.5 mm. This will increase the fatigue safety factor approximately 30 percent. The necessary pressure level and the effect obtained by the selected pressure level depends on the circumstances, such as the material of the subject surface.

According to an embodiment of the invention, the autofrettage process is performed by closing the open end of the first cavity portion pressure tightly and filling the first cavity portion with an incompressible fluid and increasing the pressure in the first cavity portion. Advantageously, the pressure in the first cavity portion is increased by a pump provided in an autofrettage device used to perform the process inducing a plastic deformation for inner surface layers of the first cavity portion.

According to an embodiment of the invention, the autofrettage process is performed by sealing the open end of the first cavity portion pressure tightly and filling the first cavity portion with an incompressible fluid and increasing the pressure in the first cavity portion by introducing a volume displacement element into the first cavity portion. Such a volume displacement element may be for example a metal pin or a piston arranged to move into the fluid volume displacing the fluid volume and thus increasing the pressure in the sealed space.

According to an embodiment of the invention the pressure in the first cavity portion is increased to more than 300 MPa in the autofrettage process.

According to an embodiment of the invention, the pressure in the first cavity portion is increased to more than 500 MPa in the autofrettage process.

The work piece is arranged pressure tightly between a first body part and a second body part of an autofrettage apparatus so that the first body part seals pressure tightly the open end of the first cavity portion during the autofrettage process. The closed end of the first cavity portion acts as a plug. The closed end is a base material of the work piece. Therefore, the autofrettage process can be performed particularly advantageously.

According to an aspect, the autofrettage device is arranged to totally enclose the work piece. The work piece is arranged completely into a space formed inside the first body part and the second body part. Thus the first body part and the second body part improve safety and prevent any damage to occur for the work piece. In addition, advantageously, the work piece is completely enclosed by the first body part and the second body part. This will also provide a very pressure tight arrangement.

According to an embodiment of the invention, the autofrettage process is practised in one or more separated successive steps. According to an embodiment of the invention, in a first step of the autofrettage process the pressure is increased up to a predetermined pressure rate in the first cavity portion and the pressure is released. In a second step the pressure is increased up to a predetermined pressure rate in the first cavity portion and the pressure is released.

According to an aspect, the pressure in the first step is the same as in the second step.

According to an aspect, the pressure in the second step is higher than in the first step.

According to an aspect, the pressure is more than 300 MPa.

According to an aspect, the pressure is more than 500 MPa.

For example, approximately 1.5 mm deep zone with over 300 MPa compressive stress is obtained and it can be obtained with two load cycles of autofrettage process.

According to an embodiment of the invention the method comprises the step of forming the first cavity portion having a length 75 % - 95 % of a complete length of the cavity, which the cavity is extending from the first face portion of the work piece.

According to an aspect, the cavity is formed as a fluid channel. The fluid channel comprises the first cavity portion being a first fluid channel portion and the second cavity portion being a second fluid channel portion. In other words, the first portion of the fluid channel extends from the first face portion to the predetermined distance and the second channel portion of the fluid channel extends from the predetermined distance and from an end of the first channel portion to the second face portion so as to form the fluid channel. Advantageously, the first channel portion of the fluid channel is treated with the autofrettage process thus having a greater fatigue strength than the second channel portion.

According to an embodiment of the invention, the cavity is formed as a cooling fluid channel. The cooling channel comprises two portions: a first cooling bore and a second cooling bore. The first cooling bore is a first portion of the cooling channel and the first cooling bore extends from the first face portion to the predetermined distance. The second cooling bore extends from the predetermined distance and from an end of the first cooling bore to the second face portion. The first cooling bore undergoes the autofrettage process. The method is particularly suitable to increase the fatigue strength of the cooling bore or portions of the cooling channel, particularly a central portion of the cooling channel.

Another object of the invention is met by a cylinder head blank comprising a body having a number of faces wherein the cylinder head blank comprises a cavity that is formed of a first cavity portion and a second cavity portion, and that the first cavity portion extends from a first face portion along a predetermined path to a predetermined distance inside the cylinder head blank and that the second cavity portion extends from an end of the first cavity portion to a second face portion, and thus the cavity has a first end and a second end, and the first end is open and a second end is open, and that fatigue strength of the surface of the first cavity portion is greater than fatigue strength of the surface of the second cavity portion.

According to the invention, the first cavity portion has been hardened by an autofrettage process and has compressive residual stress in its inner surface.

### Brief Description of Drawings

In the following, the invention will be described with reference to the accompanying exemplary, schematic drawings, in which
Figure 1a illustrates a cross sectional view of a work piece according to an embodiment of the invention,
Figure 1b illustrates an A-A view of the work piece shown in Figure 1a according to the invention,
Figure 2 illustrates the method performing an autofrettage process of the work piece according to an embodiment of the invention,
Figure 3 illustrates a cross sectional view of the work piece according to an embodiment of the invention,
Figure 4 illustrates a cross sectional view of the work piece according to an embodiment of the invention, and
Figure 5 illustrates a cross sectional view of the work piece according to an embodiment of the invention.

### Detailed Description of Drawings

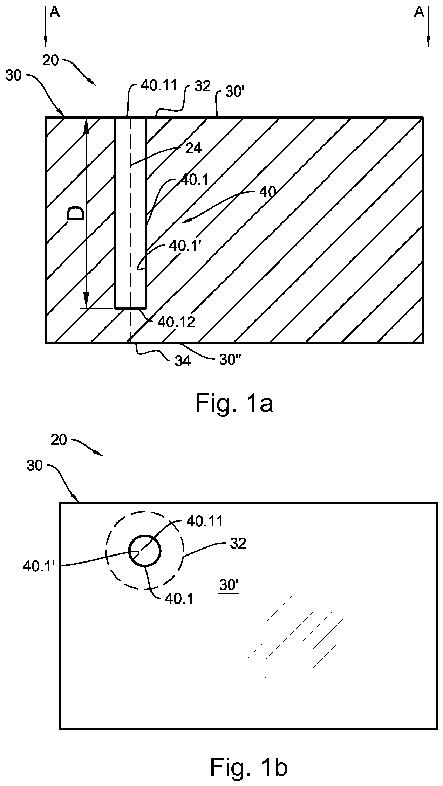

Figure 1a illustrates schematically a work piece 20 having a plurality of faces 30 and thus having generally a block structure or alike. One face of the block structure will constitute a wall of the combustion chamber when finished cylinder head is assembled to the engine. One face of the work piece 20 will constitute a wall of the combustion chamber when the cylinder head will be assembled into an engine. A path 24 defines a location and route for a cavity 40. The path is selected according to desired design of the cylinder head. Thus the method may also comprise a step for defining the path 24 for the first cavity portion 40.1 and the cavity 40 which the path 24 extends from the first face portion 34, going inside the work piece 20, to the second face portion 32. The eventual cavity 40 will be formed of a first cavity portion 40.1 and a second cavity portion 40.2, by means of the method according to the invention, in which the work piece is formed to become the cylinder head of the engine. In other words, the path 24 defines the location where the first cavity portion 40.1, the second cavity 40.2 and thus the cavity 40 will be manufactured. The path 24 goes inside the work piece 20 and the path 24 is defined to extend from a first face 30' to a second face 30". The path 24 defines a central axis of the first cavity portion 40.1 and also the cavity 40 to be formed.

Specifically, the path 24 is defined to lead from a first face portion 32 of the first face 30' to a second face portion 34 of the second face 30". This means that even if not shown in the figure it is possible that both the first face portion 32 and the second face portion 34 are arranged on a same face i.e. the path 24 starts and ends on the same face. The first face 30' is located opposite the second face 30" as illustrated.

Next step of the method comprises forming a first cavity portion extending from a first face portion to a predetermined distance located inside the work piece. Thus the first cavity portion 40.1 extends from the first face 30' to a predetermined distance D inside the work piece 20. The cavity has a first end 40.11 which is the open end of the cavity portion 40.1 and a second end 40.12. The second end 40.12 of the first cavity portion 40.1 is a closed end. The first end 40.11 is located at the first face 30' and the second end 40.12 is located on the path 24 inside the work piece 20.

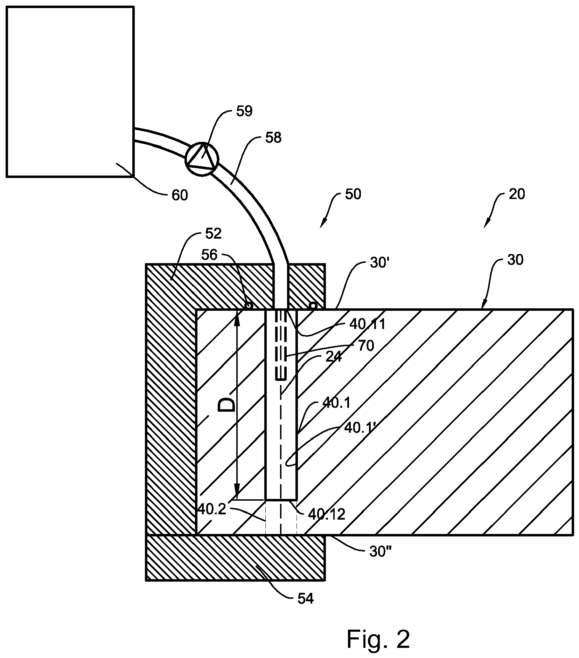

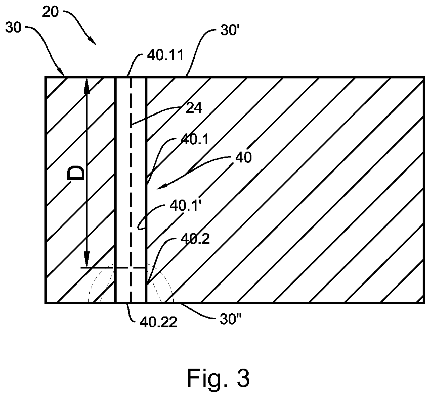

A length of the first cavity portion 40.1 is less than a length of the cavity 40 when completed as shown in Figures 2 and 3. According to an embodiment of the invention the length of the first cavity portion 40.1 is 75% - 95% of the length of the formed cavity 40. In other words, the length of the first cavity portion has a length 75 % - 95 % of a length of the path 24.

Figure 1b illustrates a view A-A of the work piece 20 shown in Figure 1a. The first face portion 32 of the first face 30' is shown as a dashed line and it is illustrated schematically as a circle. It should also be noted that the work piece typically comprises a plurality of channels, channel portions and other details which are not shown herein for the sake of clarity. This is particularly the case when the work piece is an unfinished cylinder head.

Next step of the method comprises sealing the first end of the first cavity portion so that an autofrettage process can be performed. Figure 2 illustrates a step of the method of producing a cylinder head from the work piece 20. Here the first end 40.11 of the first cavity portion is sealed such that is suitable for undergoing an autofrettage process. Figure 2 further illustrates a step of the method performing the autofrettage process to the first cavity portion 40.1, particularly to the surfaces or walls of the first cavity portion. An autofrettage apparatus 50 is assembled in connection with the work piece 20 such that it seals the first cavity portion in a manner of withholding the forces involved in the process. The autofrettage apparatus 50 comprises, at least two body parts: a first body part 52 and a second body part 54 attached together so that the first body part 52 seals pressure tightly the open end 40.11 of the first cavity portion 40.1 during the autofrettage process. The first body part 52 and the second body part 54 may enclose the work piece at least partially or completely. The first body part 52 and the second body part 54 are arranged to be supported solely by the work piece 20 such that no external support is needed for receiving the forces involved in the process. This also prevents damage to occur for the work piece 20 during the autofrettage process. According to an embodiment the first body part 52 is provided with a sealing 56 to accomplish the sealing the end of the first cavity portion. Advantageously, the sealing 56 is in contact with the first face 30' and in proximity of the open end 40.11 of the first cavity portion 40.1. The sealing is arranged between the first body part 52 and the work piece 20 so sealing the first cavity portion 40.1 and preventing a leakage to occur during the autofrettage process. The number of sealing members is not necessarily limited to only one. The autofrettage apparatus 50 may comprise only one body part 52 that can be releasably fastened to the work piece 20. The fastening of the body part 52 may be provided with any conventional means such as with bolts arranged to bolt holes of the work piece 20 (not shown).

Next step of the method includes a step of performing an autofrettage process to the first cavity portion. The autofrettage apparatus 50 is provided with a conduit 58 so as to introduce incompressible fluid from a fluid source 60 into the first cavity portion 40.1. Note that incompressible fluid refers herein in general to any suitable fluid for the autofrettage process. The conduit 58 is preferably provided with a pump 59 so as to maintain an adequate pressure of autofrettage fluid introduced from the fluid source 60 into the first cavity portion 40.1. The autofrettage process can be provided by feeding the incompressible fluid from the fluid source 60 into the first cavity portion 40.1 and increasing the pressure therein. The pressure in the first cavity portion 40.1 can be increased to desired level by increasing and maintaining the pressure by the pump 59. Another approach is to fill the first cavity portion 40.1 by the incompressible fluid and then guiding a volume displacement element 70 (shown as a dashed line due to the fact of being an alternative embodiment) such as a pin or alike into the first cavity portion 40.1 of the fluid channel so increasing the pressure therein.

Advantageously, during the autofrettage process, the closed end 40.12 of the first cavity portion 40.1 acts as a first plug whereas the first body part 52 of the autofrettage apparatus acts as a second plug. Therefore, a desired increase of a fatigue strength of an inner surface 40.1' or inner surface layers of the first cavity portion 40.1 is obtained. The method is particularly advantageous when at least central portions of cavities or fluid channels are needed to be treated with the autofrettage process. Generally, the central portions of fluid channels can be very critical and it is extremely unwanted that crack initiations or cracks occur therein.

The autofrettage process induces plastic deformation of an inner surface or inner surface layers of the corresponding first cavity portion so as to increase a fatigue strength of the first cavity portion. Advantageously, during the autofrettage process, pressure is increased to at least 300 MPa in the first cavity portion 40.1. More advantageously, pressure is increased to more than 500 MPa in the first cavity portion 40.1. After the autofrettage process, the pressure in the first cavity portion 40.1 is released. The autofrettage process will increase a diameter of the first cavity portion 40.1 slightly and the first cavity portion 40.1 is thus hardened by the autofrettage process. A procedure of increasing pressure in the first cavity portion 40.1 at a predetermined level and then releasing the pressure can be done once, twice or three times or even more so as to increase the fatigue strength of the first cavity portion to desired level. This means that the autofrettage process can be practiced in one or more stages. Finally after the autofrettage process the autofrettage fluid is removed from the first cavity portion 40.1, after the pressure in the first cavity portion 40.1 has been released. Here the closed end is ready for removal to form a second cavity portion 40.2 shown with dotted line in Figure 2.

After the pressure has been released and the autofrettage fluid is removed from the first cavity portion 40.1, the work piece 20 is ready to a completion of the cavity 40. Figure 3 shows the work piece 20 at the next stage of the method according to the invention where the method comprises opening the closed end of the first cavity portion. This means that a second cavity portion is opened to form a cavity portion beginning from the closed end of the first cavity portion and extending to a second face portion of the work piece and this way completing a cavity, which finished cavity is leading from the first face portion and inside the work piece to the second face portion of the work piece.

In the Figure 3 the closed end 40.12 of the first cavity portion 40.1 acting as the first plug has been removed such that the closed end 40.12 of the first cavity portion 40.1 is opened. The second cavity portion 40.2 is extending from the second end 40.12 of the first cavity portion 40.1 to a second face portion 34 of the work piece 20. Thus the second cavity portion 40.2 is formed by the removal of the first plug. The cavity 40 is completed and the cavity 40 comprises two cavity portions: the first cavity portion 40.1 and a second cavity portion 40.2. The surfaces of first cavity portion 40.1 has been hardened by the autofrettage process and thus fatigue strength of the surface of the first cavity portion 40.1 is greater than fatigue strength of the surface of the second cavity portion 40.2. The cavity 40 has now its first end 40.11 open and a second end open 40.22 as well. As can be seen the cavity 40 extends from the first face 30' to the second face 30". Particularly, the cavity 40 goes through the work piece 20 extending from the first face portion 32 to the second face portion 34. The cavity 40 also follows the defined path 24. In this embodiment of the invention, the path 24 is the central axis for the cavity 40. The cross sectional shapes of the first and the second cavity portions may be different. The cavity 40 can be a fluid channel such as a cooling fluid channel. Figure 3 also depicts cylinder head blank according to an embodiment of the invention. The blank is formed of the work piece comprising a body having a number of faces 30. The cylinder head blank comprises now a cavity 40 that is formed of a first cavity portion 40.1 and a second cavity portion 40.2, and the first cavity portion 40.1 extends from a first face portion 32 of the cylinder head blank to a predetermined distance D inside the cylinder head blank and the second cavity portion 40.2 extends from an end 40.12 of the first cavity portion 40.2 to a second face portion 34 of the cylinder head blank. Thus the cavity 40 has a first end 40.11 and a second end 40.22, and the first end 40.11 is open and a second end 40.22 is open. In the cylinder head blank according to the invention the fatigue strength of the surface of the first cavity portion 40.1 is greater than fatigue strength of the surface of the second cavity portion 40.2.

In the blank the first cavity portion 40.1 has been hardened by an autofrettage process and it has compressive residual stress in its inner surface. The blank is used for producing a cylinder head by means of the method according to the invention.

The shape of the second cavity portion 40.2 may vary which is depicted by dotted lines in the Figure 3. The present invention is applicable to provide channels with hardened surfaces for various purposes in a cylinder head for in internal combustion engine, such as cooling fluid channels, assemble space for fuel injector etc.

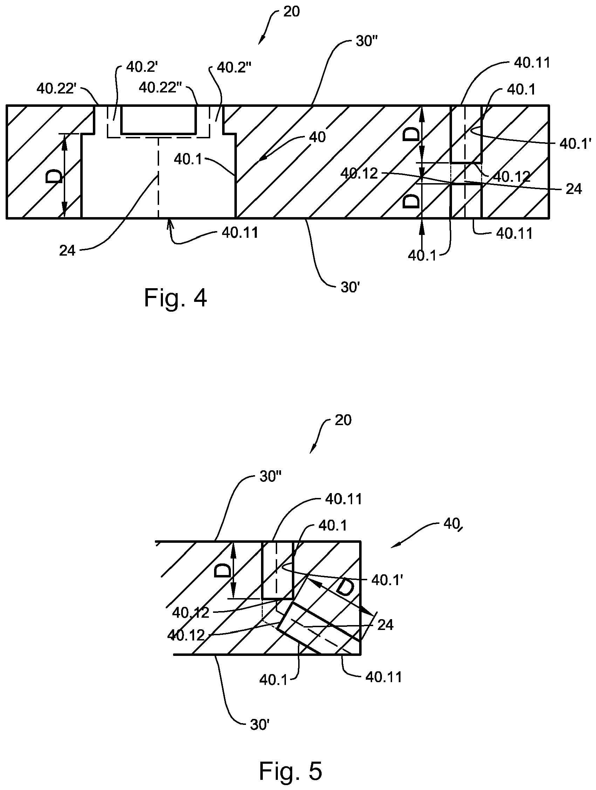

Figure 4 illustrates an embodiment wherein the path 24 is divided into two branches and wherein the cavity 40 comprises the first cavity portion 40.1. The cavity comprises further a second cavity portion 40.2' and a third cavity portion 40.2" which are first used as the first plugs, and opened after performing the autofrettage process, as explained in connection with Figures 2-3. Thus the cavity 40 follows substantially the path 24. Now the cavity has the first end 40.11 open, a second end 40.22' open and a third end 40.22" open. In this embodiment, fatigue strength of the first cavity portion 40.1 is increased with the autofrettage process and after the autofrettage process the cavity 40 is formed by opening the closed end by the second cavity portion 40.2' and the third cavity portion 40.2".

Figure 4 depicts on the right side of the figure also an embodiment of the invention where two opposite first cavity portions 40.1 are arranged to a common path 24 defining the location and route for the cavity to be formed using a common closed second end 40.12 as the common first plug for performing the autofrettage process in both of the first cavities, either simultaneously, or successively.

In Figure 5 there is depicted an embodiment of the invention where the defined path 24 for the cavity deviates from a straight line. Thus the cavity may have different shapes. The first cavity portion 40.1 may be formed by boring or otherwise machining or even during casting process, in which case the first plug i.e. the closed end is also formed in the casting process.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. Method of producing a cylinder head (20) for an internal combustion piston engine comprising steps of:
- Forming a work piece (20) to be completed to become the cylinder head (20),
- Forming a first cavity portion (40.1) extending from a first face portion (32) of the work piece (20) to a predetermined distance (D) inside the work piece (20), which first cavity portion (40.1) has a first end (40.11) and a second end (40.12), and the first end (40.11) being an open end and the second end (40.12) being a closed end,
- Sealing the first end (40.11) of the first cavity portion (40.1) so being suitable for undergoing an autofrettage process,
- Performing the autofrettage process to the first cavity portion (40.1), and
- Opening the closed end (40.12) of the first cavity portion (40.1) thus forming a second cavity portion (40.2), which second cavity portion (40.2) is extending from the second end (40.12) of the first cavity portion (40.1) to a second face portion (34) of the work piece (20) and thus forming a cavity (40) comprising the first cavity portion (40.1) and the second cavity portion (40.2), and which cavity (40) is extending from the first face portion (32) to the second face portion (34) of the work piece (20).

2. A method according to claim 1, **characterized in that** the autofrettage process is performed by closing the open end (40.11) of the first cavity portion (40.1) pressure tightly and filling the first cavity portion (40.1) with an incompressible fluid and increasing the pressure in the first cavity portion (40.1).

3. A method according to claim 1 or 2, **characterized in that** the autofrettage process is performed by sealing the open end (40.11) of the first cavity portion (40.1) pressure tightly and filling the first cavity portion (40.1) with an incompressible fluid and increasing the pressure in the first cavity portion (40.1) by introducing a volume displacement element (70) into the first cavity portion (40.1).

4. A method according to anyone of preceding claims 1-3, **characterized in that** in the autofrettage process the pressure in the first cavity portion (40.1) is increased to more than 300 MPa.

5. A method according to claim 4, **characterized in** the autofrettage process the pressure in the first cavity portion (40.1) is increased to more than 500 MPa.

6. A method according to anyone of preceding claims 1-5, **characterized in that** the work piece (20) is arranged pressure tightly between a first body part (52) and a second body part (54) of an autofrettage apparatus (50) so that the first body part (52) seals pressure tightly the open end (40.11) of the first cavity portion (40.1) during the autofrettage process.

7. A method according to anyone of preceding claims 1-6, **characterized in that** the autofrettage process is practised in two separated successive steps wherein in a first step of the autofrettage process the pressure is increased up to a predetermined pressure rate in the first cavity portion and the pressure is released and in a second step the pressure is increased up to a predetermined pressure rate in the first cavity portion and the pressure is released.

8. A method according to claim 1, **characterized in that** the first cavity portion (40.1) is 75 % - 95 % of length of a complete cavity (40).

9. A method according to anyone of preceding claims 1-8, **characterized in that** the cavity (40) is formed as a cooling fluid channel.

10. A cylinder head blank for an internal combustion piston engine comprising a body having a number of faces (30) and comprising a cavity (40) that is formed of a first cavity portion (40.1) and a second cavity portion (40.2), and that the first cavity portion (40.1) extends from a first face portion (32) of the cylinder head blank to a predetermined distance (D) inside the cylinder head blank and that the second cavity portion (40.2) extends from an end (40.12) of the first cavity portion (40.2) to a second face portion (34) of the cylinder head blank, and thus the cavity (40) has a first end (40.11) and a second end (40.22), and that the first end (40.11) is open and a second end (40.22) is open, and that fatigue strength of the surface of the first cavity portion (40.1) is greater than fatigue strength of the surface of the second cavity portion (40.2), **characterized in that** the first cavity portion (40.1) has been hardened by an autofrettage process and has compressive residual stress in its inner surface.

## Patentansprüche

1. Verfahren zum Herstellen eines Zylinderkopfes (20) für einen Kolbenmotor mit Innenverbrennung, das folgende Schritte umfasst:
- Ausbilden eines Werkstücks (20), das dazu fertigzustellen ist, der Zylinderkopf (20) zu werden,
- Ausbilden eines ersten Hohlraumabschnitts (40.1), der sich von einem ersten Seitenabschnitt (32) des Werkstücks (20) über eine vorgegebene Strecke (D) in das Werkstück (20) hinein erstreckt, wobei dieser erste Hohlraumabschnitt (40.1) ein erstes Ende (40.11) und ein zweites Ende (40.12) aufweist und wobei das erste Ende (40.11) ein offenes Ende ist und das zweite Ende (40.12) ein geschlossenes Ende ist,
- Abdichten des ersten Endes (40.11) des ersten Hohlraumabschnitts (40.1), so dass dieser zum Durchlaufen eines Autofrettage-Prozesses geeignet ist,
- Durchführen des Autofrettage-Prozesses bezüglich des ersten Hohlraumabschnitts (40.1) und
- Öffnen des geschlossenen Endes (40.12) des ersten Hohlraumabschnitts (40.1) und dadurch Ausbilden eines zweiten Hohlraumabschnitts (40.2), wobei dieser zweite Hohlraumabschnitt (40.2) sich von dem zweiten Ende (40.12) des ersten Hohlraumabschnitts (40.1) zu einem zweiten Seitenabschnitt (34) des Werkstücks (20) erstreckt, und dadurch Ausbilden eines Hohlraums (40), der den ersten Hohlraumabschnitt (40.1) und den zweiten Hohlraumabschnitt (40.2) umfasst, und wobei dieser Hohlraum (40) sich von dem ersten Seitenabschnitt (32) zu dem zweiten Seitenabschnitt (34) des Werkstücks (20) erstreckt.

2. Verfahren nach Anspruch 1, **dadurch gekennzeichnet, dass** der Autofrettage-Prozess durch druckdichtes Verschließen des offenen Endes (40.11) des ersten Hohlraumabschnitts (40.1) und Füllen des ersten Hohlraumabschnitts (40.1) mit einem nicht komprimierbaren Fluid und Erhöhen des Drucks in dem ersten Hohlraumabschnitt (40.1) erfolgt.

3. Verfahren nach Anspruch 1 oder 2, **dadurch gekennzeichnet, dass** der Autofrettage-Prozess durch druckdichtes Verschließen des offenen Endes (40.11) des ersten Hohlraumabschnitts (40.1) und Füllen des ersten Hohlraumabschnitts (40.1) mit einem nicht komprimierbaren Fluid und Erhöhen des Drucks in dem ersten Hohlraumabschnitt (40.1) durch Einführen eines Volumenverdrängungselements (70) in den ersten Hohlraumabschnitt (40.1) erfolgt.

4. Verfahren nach einem der vorhergehenden Ansprüche 1-3, **dadurch gekennzeichnet, dass** in dem Autofrettage-Prozess der Druck in dem ersten Hohlraumabschnitt (40.1) auf mehr als 300 MPa erhöht wird.

5. Verfahren nach Anspruch 4, **dadurch gekennzeichnet, dass** in dem Autofrettage-Prozess der Druck in dem ersten Hohlraumabschnitt (40.1) auf mehr als 500 MPa erhöht wird.

6. Verfahren nach einem der vorhergehenden Ansprüche 1-5, **dadurch gekennzeichnet, dass** das Werkstück (20) druckdicht zwischen einem ersten Körperteil (52) und einem zweiten Körperteil (54) einer Autofrettage-Vorrichtung (50) angeordnet wird, so dass während des Autofrettage-Prozesses der erste Körperteil (52) das offene Ende (40.11) des ersten Hohlraumabschnitts (40.1) druckdicht verschließt.

7. Verfahren nach einem der vorhergehenden Ansprüche 1-6, **dadurch gekennzeichnet, dass** der Autofrettage-Prozess in zwei getrennten aufeinander folgenden Schritten erfolgt, wobei in einem ersten Schritt des Autofrettage-Prozesses der Druck in dem ersten Hohlraumabschnitt bis zu einem vorgegebenen Druckwert erhöht wird und der Druck weggenommen wird und in einem zweiten Schritt der Druck in dem ersten Hohlraumabschnitt bis zu einem bestimmten Druckwert erhöht wird und der Druck weggenommen wird.

8. Verfahren nach Anspruch 1, **dadurch gekennzeichnet, dass** der erste Hohlraumabschnitt (40.1) 75 % - 95 % der Länge eines vollständigen Hohlraums (40) misst.

9. Verfahren nach einem der vorhergehenden Ansprüche 1-8, **dadurch gekennzeichnet, dass** der Hohlraum (40) als Kühlfluidkanal ausgebildet wird.

10. Zylinderkopfrohling für einen Kolbenmotor mit Innenverbrennung, der einen Körper umfasst, der eine Anzahl von Seiten (30) aufweist, und einen Hohlraum (40) umfasst, der aus einem ersten Hohlraumabschnitt (40.1) und einem zweiten Hohlraumabschnitt (40.2) ausgebildet ist, und dass der erste Hohlraumabschnitt (40.1) sich von einem ersten Seitenabschnitt (32) des Zylinderkopfrohlings über eine vorgegebene Strecke (D) in den Zylinderkopfrohling hinein erstreckt und dass der zweite Hohlraumabschnitt (40.2) sich von einem Ende (40.12) des ersten Hohlraumabschnitts (40.2) zu einem zweiten Seitenabschnitt (34) des Zylinderkopfrohlings erstreckt und somit der Hohlraum (40) ein erstes Ende (40.11) und ein zweites Ende (40.22) aufweist und dass das erste Ende (40.11) offen ist und ein zweites Ende (40.22) offen ist und dass eine Dauerfestigkeit der Oberfläche des ersten Hohlraumabschnitts (40.1) größer ist als eine Dauerfestigkeit der Oberfläche des zweiten Hohlraumabschnitts (40.2), **dadurch gekennzeichnet, dass** der erste Hohlraumabschnitt (40.1) durch einen Autofrettage-Prozess gehärtet wurde und in seiner Innenfläche eine Druckeigenspannung aufweist.

## Revendications

1. Procédé de fabrication d'une culasse de cylindre (20) pour un moteur à pistons à combustion interne comprenant les étapes de :
- formage d'une pièce d'usinage (20) destinée à être achevée pour devenir la culasse de cylindre (20),
- formage d'une première partie de cavité (40.1) s'étendant à partir d' une première partie de face (32) de la pièce d'usinage (20) vers une distance prédéterminée (D) à l'intérieur de la pièce d'usinage (20), laquelle première partie de cavité (40.1) a une première extrémité (40.11) et une seconde extrémité (40.12) et la première extrémité (40.11) étant une extrémité ouverte et la seconde extrémité (40.12) étant une extrémité fermée,
- étanchéification de la première extrémité (40.11) de la première partie de cavité (40.1) étant ainsi adaptée pour subir un process d'autofrettage,
- réalisation du process d'auto-frettage sur la première partie de cavité (40.1) et
- ouverture de l'extrémité fermée (40.12) de la première partie de cavité (40.1) formant ainsi une seconde partie de cavité (40.2), laquelle seconde partie de cavité (40.2) s'étend à partir de la seconde extrémité (40.12) de la première partie de cavité (40.1) vers une seconde partie de face (34) de la pièce d'usinage (20) et formant ainsi une cavité (40) comprenant la première partie de cavité (40.1) et la seconde partie de cavité (40.2), et laquelle cavité (40) s'étend de la première partie de face (32) vers la seconde partie de face (34) de la pièce d'usinage (20).

2. Procédé selon la revendication 1, **caractérisé en ce que** le process d'auto-frettage est effectué en fermant l'extrémité ouverte (40.11) de la première partie de cavité (40.1) en étanchéité à la pression et en remplissant la première partie de cavité (40.1) d'un fluide incompressible et en augmentant la pression dans la première partie de cavité (40.1).

3. Procédé selon la revendication 1 ou 2, **caractérisé en ce que** le process d'auto-frettage est effectué en fermant de façon étanche l'extrémité ouverte (40.11) de la première partie de cavité (40.1) en étanchéité à la pression et en remplissant la première partie de cavité (40.1) d'un fluide incompressible et en augmentant la pression dans la première partie de cavité (40.1) en introduisant un élément de déplacement de volume (70) jusque dans la première partie de cavité (40.1).

4. Procédé selon l'une quelconque des revendications 1 - 3, **caractérisé en ce que** dans le process d'autofrettage, la pression dans la première partie de cavité (40.1) est augmentée à plus de 300 MPa.

5. Procédé selon la revendication 4, **caractérisé en ce que caractérisé en ce que** dans le process d'autofrettage, la pression dans la première partie de cavité (40.1) est augmentée à plus de 500 MPa.

6. Procédé selon l'une quelconque des revendications 1 - 5, **caractérisé en ce que** la pièce d'usinage (20) est agencée en étanchéité à la pression entre une première partie de corps (52) et une seconde partie de corps (54) d'un appareil d'auto-frettage (50) de façon à ce que la première partie de corps (52) étanchéifie contre la pression l'extrémité ouverte (40.11) de la première partie de cavité (40.1) durant le process d'auto-frettage.

7. Procédé selon l'une quelconque des revendications 1 - 6, **caractérisé en ce que** le process d'auto-frettage est pratiqué en deux étapes successives séparées, dans lequel dans une première étape du process d'autofrettage, la pression est augmentée jusqu'à un taux de pression prédéterminé dans la première partie de cavité et la pression est relâchée et dans une seconde étape, la pression est augmentée jusqu'à un taux de pression prédéterminé dans la première partie de cavité et la pression est relâchée.

8. Procédé selon la revendication 1, **caractérisé en ce que** la première partie de cavité (40.1) fait 75 % à 95 % de la longueur d'une cavité (40) complète.

9. Procédé selon l'une quelconque des revendications 1 - 8, **caractérisé en ce que** la cavité (40) est formée en tant qu'un canal de réfrigérant.

10. Flanc de culasse de cylindre pour un moteur à pistons à combustion interne comprenant un corps ayant un nombre de faces (30) et comprenant une cavité (40) qui est formée d'une première partie de cavité (40.1) et d'une seconde partie de cavité (40.2) et que la première partie de cavité (40.1) s'étend à partir d'une première partie de face (32) de la culasse de cylindre vers une distance (D) prédéterminée à l'intérieur du flanc de culasse de cylindre et que la seconde partie de cavité (40.2) s'étend à partir d'une extrémité (40.12) de la première partie de cavité (40.1) vers une seconde partie de face (34) du flanc de culasse de cylindre, et ainsi la cavité (40) a une première extrémité (40.11) et une seconde extrémité (40.22), et que la première extrémité (40.11) est ouverte et que la seconde extrémité (40.22) est ouverte, et que la résistance à la fatigue de la surface de la première partie de cavité (40.1) est supérieure à la résistance à fatigue de la surface de la seconde partie de cavité (40.2), **caractérisé en ce que** la première partie de cavité (40.1) a été durcie par un process d'auto-frettage et a une contrainte résiduelle compressive dans sa surface intérieure.
